# EUROPEAN PATENT APPLICATION

(11) **EP 4 597 448 A1**
(43) Date of publication of application: **06.08.2025**
(21) Application number: 24155155.5
(22) Date of filing: 01.02.2024
(51) Int. Cl.: G06V 10/82, G06Q 10/04, G06V 20/10, G06V 20/56, G06V 20/68, G06F 123/02

(54) **METHOD AND SYSTEM FOR GENERATING TIME SERIES TRACKING DATA FOR CROP GROWTH MANAGEMENT**

(71) Applicant: Korea Electronics Technology Institute, Bundang-gu, Seongnam-si Gyeonggi-do 13509 (KR)
(72) Inventor: KUM, Seung Woo, 16817 Yongin-si (KR); MOON, JaeWon, 03905 Seoul (KR); OH, Seungtaek, 07552 Seoul (KR)
(74) Representative: Isarpatent

(57) **Abstract**

Provided is a method of generating time series tracking data for crop growth management. The method includes: acquiring video and location information according to movement of a mobile camera installed in a smart farm; generating video analysis information on a crop from the video based on a pre-learned video analysis algorithm; sorting the video analysis information and the location information based on time information at which the video is captured to generate the time series tracking data; storing the generated time series tracking data; and analyzing and predicting the crop growth based on the time series tracking data.

## Description

### BACKGROUND

### (a) Technical Field

The present invention relates to a system and method for generating time series tracking data for crop growth management.

### (b) Background Art

Techniques that apply deep learning technology are rapidly being used as techniques to check plant or crop growth. In particular, deep learning techniques for CNN-based video analysis are being applied to various technologies for image classification, object detection, etc. In this way, technologies that may recognize leaves, flowers, fruits, and the like of crops and check their conditions are being developed.

The above recognition technologies are techniques that may check a status of a specific crop located in a single place at a single time. In order to check the actual crop growth, it is necessary to check actual crop growth records (time series data) rather than information on this specific time. By continuously collecting data on specific crop growth along a time axis and then analyzing the data, information on the growth may be confirmed.

Meanwhile, in order to check time axis information, an object tracking technology using deep learning is generally developed and utilized. However, this technology makes it easy to track objects with no change in shape, but has difficulty in uniformly applying to plants whose conditions are continuously changing.

In addition, monitoring large quantities of crops in environments such as smart farms is almost impossible with a single or small number of cameras, and in principle, requires a large number of cameras, which has the problem of causing a rapid increase in costs.

### SUMMARY OF THE DISCLOSURE

An embodiment of the present invention provides a system and method for generating time series tracking data for crop growth management capable of analyzing and predicting crop growth in a smart farm through video-based data acquired based on a mobile camera.

However, the technical problems to be achieved by the embodiments of the present disclosure are not limited to the technical problems as described above, and other technical problems may exist.

According to a first embodiment of the present invention, a method of generating time series tracking data for crop growth management includes: acquiring video and location information according to movement of a mobile camera installed in a smart farm; generating video analysis information on a crop from the video based on a pre-learned video analysis algorithm; sorting the video analysis information and the location information based on time information at which the video is captured to generate the time series tracking data; storing the generated time series tracking data; and analyzing and predicting the crop growth based on the time series tracking data.

The generating of the video analysis information on the crop from the video based on the pre-learned video analysis algorithm may include inputting the video to a video analysis algorithm to output the video analysis information including crop composition information and crop growth information.

In the acquiring of the video and location information according to the movement of the mobile camera installed in the smart farm, the mobile camera may acquire the video and location information while moving along a cable or rail installed in the smart farm by a movement method of at least one of horizontal movement, vertical movement, and diagonal movement.

The analyzing and predicting of the crop growth based on the time series tracking data may include, when an abnormality in the crop is detected based on the time series tracking data, controlling the mobile camera to move along the cable or rail to an area corresponding to the crop in which the abnormality is detected and capture an additional video.

The method may further include resetting a movement path of the cable or rail of the mobile camera in the smart farm based on a result of analyzing and predicting the crop growth.

The analyzing and predicting of the crop growth based on the time series tracking data may include: extracting the time series tracking data for a specific location and a specific period; and analyzing current crop growth based on the extracted time series tracking data and predicting the crop growth based on growth trend information in a specific period.

According to a second embodiment of the present invention, a system for generating time series tracking data for crop growth management includes: a mobile camera that is installed in a smart farm to acquire video and location information according to movement; a video analysis module that generates video analysis information on a crop from the video based on a pre-learned video analysis algorithm; a time series tracking data generation module that sorts the video analysis information and the location information based on time information at which the video is captured to generate the time series tracking data; a time series tracking data storage module that stores the generated time series tracking data; and an analysis and prediction module that analyzes and predicts the crop growth based on the stored time series tracking data.

In addition, there may be further provided another method and another system for implementing the present invention and a computer-readable recording medium on which a computer program for executing the method is recorded.

### BRIEF DESCRIPTION OF THE DRAWINGS

FIG. 1 is a block diagram of a system for generating time series tracking data for crop growth management according to an embodiment of the present invention.
FIG. 2 is a flowchart of a method of generating time series tracking data according to an embodiment of the present invention.

### DETAILED DESCRIPTION

Various advantages and features of the present invention and methods accomplishing them will become apparent from the following description of embodiments with reference to the accompanying drawings. However, the present invention is not limited to embodiments to be described below, but may be implemented in various different forms, these embodiments will be provided only in order to make the present invention complete and allow those skilled in the art to completely recognize the scope of the present invention, and the present invention will be defined by the scope of the claims.

Terms used in the present specification are for explaining embodiments rather than limiting the present invention. Unless otherwise stated, a singular form includes a plural form in the present specification. Throughout this specification, the term "comprises" and/or "comprising" will be understood to imply the inclusion of stated constituents but not the exclusion of any other constituents. Like reference numerals refer to like components throughout the specification and "and/or" includes each of the components mentioned and includes all combinations thereof. Although "first," "second," and the like are used to describe various components, it goes without saying that these components are not limited by these terms. These terms are used only to distinguish one component from other components. Therefore, it goes without saying that the first component mentioned below may be the second component in the technical scope of the present invention.

Unless defined otherwise, all terms (including technical and scientific terms) used in the present specification have the same meanings commonly understood by those skilled in the art to which the present invention pertains. In addition, terms defined in commonly used dictionary are not ideally or excessively interpreted unless explicitly defined otherwise.

The present invention relates to a system and method for generating time series tracking data for crop growth management.

One embodiment of the present invention captures videos of crops or plants in a smart farm space through a small amount of mobile camera, and configures the captured video data into time series data to produce various analyses and predictions for crops or plants (hereinafter collectively referred to as crops).

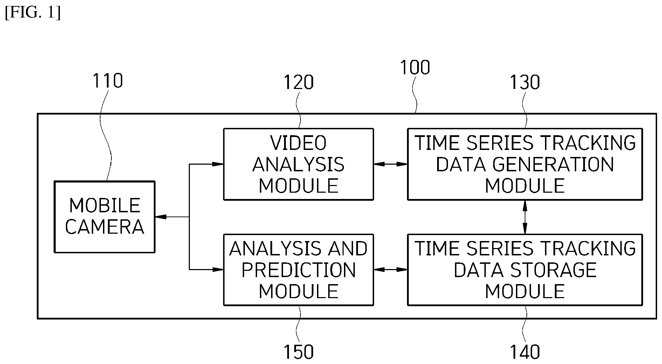

FIG. 1 is a block diagram of a system 100 for generating time series tracking data for crop growth management according to an embodiment of the present invention.

The system 100 for generating time series tracking data according to an embodiment of the present invention includes a mobile camera 110, a video analysis module 120, a time series tracking data generation module 130, a time series tracking data storage module 140, and an analysis and prediction module 150.

The mobile camera 110 is installed in the smart farm to acquire video and location information according to movement. In one embodiment, the mobile camera 110 may be a movable camera, such as a rail camera, a caterpillar camera, or a drone camera. The mobile camera 110 supports capturing and transmitting videos and images, and supports tracking a relative location (or absolute location) and path from a starting point to a current location.

The video analysis module 120 generates video analysis information on crops from the videos based on a pre-learned video analysis algorithm. The video analysis module 120 generates the video analysis information by analyzing crop information from the input video, and the analysis results may be colors, sizes, and shapes of flowers, fruits, leaves, etc.

The time series tracking data generation module 130 sorts the video analysis information and the location information based on the time information at which the video is captured to generate the time series tracking data. The time series tracking data storage module 140 stores the generated time series tracking data.

The analysis and prediction module 150 analyzes and predicts the crop growth based on the stored time series tracking data.

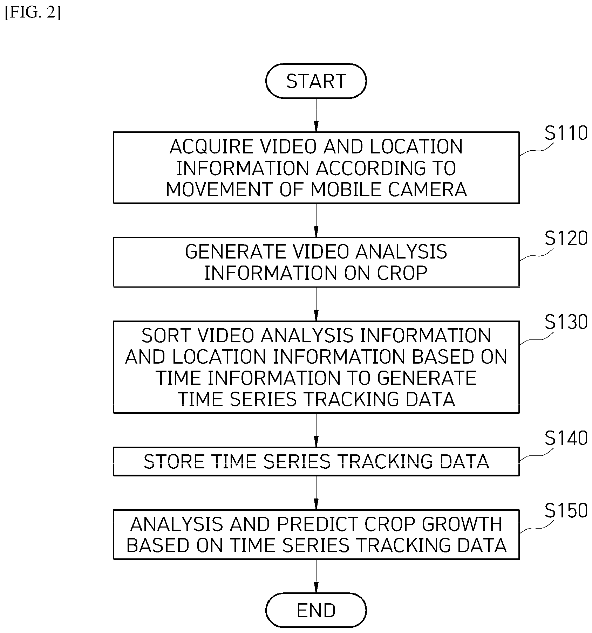

Hereinafter, a method performed by the system 100 for generating time series tracking data for crop growth management according to the embodiment of the present invention will be described in more detail with reference to FIG. 2.

FIG. 2 is a flowchart of a method of generating time series tracking data according to an embodiment of the present invention.

First, the video and location information is acquired according to the movement of the mobile camera installed in the smart farm (S 110).

The mobile camera may acquire and transmit the video of crops while moving in an open field or along a path in the smart farm. In this case, the mobile camera may transmit the information on the location when transmitting the video.

In one embodiment, the mobile camera may acquire the video and location information while moving by a movement method of at least one of horizontal movement, vertical movement, and diagonal movement along a cable or rail installed in the smart farm. In this way, the present invention allows a small number of cameras to move through the movement control and obtain video of all crops in the smart farm space without the need for multiple cameras to be fixedly installed.

In addition, the mobile camera may not only capture the video, but also obtain the location information corresponding to the time information at which the video is captured.

Next, the video analysis information on the crops from the video is generated based on the pre-learned video analysis algorithm.

In one embodiment, when a video is received through the mobile camera, the video may be input to a video analysis algorithm, and the video analysis information including crop composition information and crop growth information may be output. As an example, the video analysis information may be generated for each predetermined frame.

Meanwhile, the video analysis algorithm may be learned based on artificial intelligence algorithms such as deep learning. For example, when the entire video or video of individual crops within the smart farm is input, the crop composition information such as stems, leaves, and fruits may be output by object detection and classification. Alternatively, when the video is input, the crop growth information such as leaf sizes, fruit sizes, and colors may be output.

Next, the video analysis information and the location information are sorted based on the time information at which the video is captured to generate the time series tracking data (S 130), and the generated time series tracking data is stored (S140).

In step S130, when the analysis of the crop composition information and crop growth information is completed through the video analysis information, the time information and location information when the video is captured are acquired, and the video analysis information and location information may be sorted based on the time to generate the time series tracking data. For example, in the time series tracking data, the video analysis information and the location information may be sorted according to a predetermined time period.

Next, the crop growth is analyzed and predicted based on the time series tracking data (S150).

In one embodiment, when time series data for a specific location and a specific period is extracted, the current crop growth may be analyzed based on the extracted time series tracking data, and the crop growth may be predicted based on growth trend information in a specific period.

For example, by analyzing the crop composition information included in the time series tracking data, when a height of an individual crop is less than an average height of all crops, it may be determined that there is an abnormality in the current crop growth.

Alternatively, by analyzing the crop growth information included in the time series tracking data, if a color distribution of leaves of an individual crop differs by more than a critical range compared to an average color distribution of leaves of all crops, it may be determined that there is an abnormality in the current crop growth.

As another example, the crop growth (normal or abnormal) for a specific future period under the same conditions may be predicted based on the growth trend information in a specific past period.

In addition, in one embodiment of the present invention, when an abnormality in crops is detected based on the time series tracking data, the mobile camera is controlled to move to an area corresponding to the crops in which the abnormality is detected along a cable or rail, thereby acquiring additional video and location information.

In other words, it is possible to detect abnormal crops based on the previously acquired video, but since capturing errors or errors in the analysis process may occur and for more accurate analysis of the cause of abnormalities, according to one embodiment of the present invention, additional video may be captured by controlling the mobile camera to move to an area corresponding to crops subject to abnormality detection. Through the video, the cause of abnormalities in crops subject to abnormality detection may be analyzed, and thus, more accurate inference results may be derived.

Furthermore, the embodiment of the present invention may reset the movement path of the cable or rail in the smart farm of the mobile camera based on the results of analyzing and predicting the crop growth. For example, the mobile camera is basically controlled to move along the predetermined path, but when there are crops subject to abnormality detection, it is possible to control the cable or rail to move by increasing the number of times of capturing of the crop or resetting the movement path to increase the capturing time.

Meanwhile, according to the embodiment of the present invention, it is possible to acquire not only the video but also the location information and time information through the mobile camera, and generate map information on the smart farm space based on the video and location information. Through this map information, the current crop growth status may be easily checked over time, and an outlier degree of crops over time may be separately displayed, allowing for more intuitive confirmation and response for abnormal crops.

Meanwhile, in the above description, steps S110 to S150 may be further divided into additional steps or combined into fewer operations according to an implementation example of the present invention. Also, some operations may be omitted if necessary, and an order between operations may be changed. In addition, even if other omitted contents, the contents described in FIG. 1 are also applied to the method of generating time series tracking data in FIG. 2.

The method of generating time series tracking data for crop growth management according to the embodiment of the present invention described above may be embodied as a program (or application) and stored in a medium for execution in combination with a server which is hardware.

In order for the computer to read the program and execute the methods implemented as the program, the program may include a code coded in a computer language such as C, C++, JAVA, or machine language that the processor (CPU) of the computer may read through a device interface of the computer. Such code may include functional code related to a function or such defining functions necessary for executing the methods and include an execution procedure related control code necessary for the processor of the computer to execute the functions according to a predetermined procedure. In addition, the code may further include a memory reference related code for which location (address street number) in an internal or external memory of the computer the additional information or media necessary for the processor of the computer to execute the functions is to be referenced at. In addition, when the processor of the computer needs to communicate with any other computers, servers, or the like located remotely in order to execute the above functions, the code may further include a communication-related code for how to communicate with any other computers, servers, or the like using the communication module of the computer, what information or media to transmit/receive during communication, and the like.

The storage medium is not a medium that stores videos therein for a while, such as a register, a cache, a memory, or the like, but means a medium that semi-permanently stores the videos therein and is readable by an apparatus. Specifically, examples of the storage medium include, but are not limited to, ROM, random-access memory (RAM), CD-ROM, a magnetic tape, a floppy disk, an optical video storage device, and the like. That is, the program may be stored in various recording media on various servers accessible by the computer or in various recording media on the computer of the user. In addition, media may be distributed in a computer system connected by a network, and a computer-readable code may be stored in a distributed manner.

Operations of the method or algorithm described with reference to the embodiment of the present invention may be directly implemented in hardware, in software modules executed by hardware, or in a combination thereof. The software module may reside in a random access memory (RAM), a read only memory (ROM), an erasable programmable ROM (EPROM), an electrically erasable programmable ROM (EEPROM), a flash memory, a hard disk, a removable disk, a compact disc read-only memory (CD-ROM), or in any form of computer-readable recording medium known in the art to which the invention pertains.

According to an embodiment of the present invention described above, it is possible to generate time series data essential to analyze crop or plant growth.

In addition, it is possible to easily generate time series data and analyze growth by collecting video and location information through a small number of mobile cameras rather than a large number of cameras.

The effects of the present invention are not limited to the above-described effects, and other effects that are not mentioned may be obviously understood by those skilled in the art from the following description.

Although exemplary embodiments of the present invention have been described with reference to the accompanying drawings, those skilled in the art to which the present disclosure belongs will appreciate that various modifications and alterations may be made without departing from the spirit or essential feature of the present invention. Therefore, it is to be understood that embodiments described above are illustrative rather than being restrictive in all aspects.

## Claims

1. A method of generating time series tracking data for crop growth management performed by a computer, the method comprising:
acquiring video and location information according to movement of a mobile camera installed in a smart farm;
generating video analysis information on a crop from the video based on a pre-learned video analysis algorithm;
sorting the video analysis information and the location information based on time information at which the video is captured to generate the time series tracking data;
storing the generated time series tracking data; and
analyzing and predicting the crop growth based on the time series tracking data.

2. The method of claim 1, wherein the generating of the video analysis information on the crop from the video based on the pre-learned video analysis algorithm includes inputting the video to a video analysis algorithm to output the video analysis information including crop composition information and crop growth information.

3. The method of claim 1, wherein, in the acquiring of the video and location information according to the movement of the mobile camera installed in the smart farm, the mobile camera acquires the video and location information while moving along a cable or rail installed in the smart farm by a movement method of at least one of horizontal movement, vertical movement, and diagonal movement.

4. The method of claim 3, wherein the analyzing and predicting of the crop growth based on the time series tracking data includes, when an abnormality in the crop is detected based on the time series tracking data, controlling the mobile camera to move along the cable or rail to an area corresponding to the crop in which the abnormality is detected and capture an additional video.

5. The method of claim 4, further comprising:
resetting a movement path of the cable or rail of the mobile camera in the smart farm based on a result of analyzing and predicting the crop growth.

6. The method of claim 1, wherein the analyzing and predicting of the crop growth based on the time series tracking data includes:
extracting the time series tracking data for a specific location and a specific period; and
analyzing current crop growth based on the extracted time series tracking data and predicting the crop growth based on growth trend information in a specific period.

7. A system for generating time series tracking data for crop growth management, the system comprising:
a mobile camera that is installed in a smart farm to acquire video and location information according to movement;
a video analysis module that generates video analysis information on a crop from the video based on a pre-learned video analysis algorithm;
a time series tracking data generation module that sorts the video analysis information and the location information based on time information at which the video is captured to generate the time series tracking data;
a time series tracking data storage module that stores the generated time series tracking data; and
an analysis and prediction module that analyzes and predicts the crop growth based on the stored time series tracking data.
